# EUROPÄISCHE PATENTANMELDUNG

(11) **EP 0 652 382 A2**
(43) Veröffentlichungstag der Anmeldung: **10.05.1995**
(21) Anmeldenummer: 94117393.2
(22) Anmeldetag: 04.11.1994
(51) Int. Cl.: F16B 39/10, F16B 5/02, E04F 13/08, E04F 17/08, E04F 19/08

(54) **Befestigungsvorrichtung für Installationsschächte**

(30) Priorität: 10.11.1993 DE 9317181 U
(71) Anmelder: Burda, Herbert, D-40549 Düsseldorf (DE)
(72) Erfinder: Burda, Herbert, D-40549 Düsseldorf (DE); Schmidt, Rainer, D-56472 Nisterau (DE)
(74) Vertreter: Kossobutzki, Walter, Dipl.-Ing.(FH)

(57) **Zusammenfassung**

Die Erfindung bezieht sich auf eine Vorrichtung zur Befestigung des Traggestells eines Installationsschachtes oder dgl. auf dem Boden eines Gehäuses, bestehend aus einer Befestigungslasche, die über ein in ihr ausgebildetes Langloch mittels einer Schraube auf dem Boden gesichert ist und die eine fest mit ihr verbundene Schraube zum Anschluß des Traggestells trägt.

Um eine Verschiebung des Traggestelles bzw. des Installationsschachtes aufgrund des für die Montage erforderlichen Langloches auszuschließen, ist die Befestigungslasche (7) an ihrer Oberseite (11) mit einer quer zum Langloch (8) verlaufenden Verzahnung (12) versehen und zwischen der Oberseite (11) der Befestigungslasche (7) und dem Kopf der Schraube (10) ist eine an ihrer Unterseite ebenfalls eine entsprechende Verzahnung (14) aufweisende Zwischenplatte (13) mit einer Bohrung für die Schraube (10) angeordnet.

## Beschreibung

Die Erfindung bezieht sich auf eine Vorrichtung zur Befestigung des Traggestells eines Installationsschachtes oder dgl. auf dem Boden eines Gehäuses, bestehend aus einer Befestigungslasche, die über ein in ihr ausgebildetes Langloch mittels einer Schraube auf dem Boden gesichert ist und die eine fest mit ihr verbundene Schraube zum Anschluß des Traggestells trägt.

Bei der Herstellung von Bädern wird vielfach noch nach der sogenannten Naßbau-Methode gearbeitet, bei der in umständlicher, zeitintensiver und aufwendiger Weise Schlitze hergestellt werden, in denen dann die Installation untergebracht wird. Dabei ist immer noch eine Restausmauerung mit Sand und Bindemittel erforderlich, die der Badgestaltung Grenzen setzt. Bei der Sanierung von Altbauten hat sich eine sogenannte Vorwandinstallation durchgesetzt, bei der die Installationslleitungen auf einer Wand verlegt werden. Diese Installationsleitungen werden, zur Verbesserung des optischen Eindruckes der Wand, durch einen Schacht verkleidet, der aus einem metallischen Traggestell besteht, welches dann seinerseits zunächst mit Gipskartonplatten oder dgl. und anschließend mit keramischen Platten verkleidet wird. Dabei kann das Traggestell die Keramik-Sanitärkörper wie WC, Waschtisch, Bidet und Urinal aufnehmen. Auch bei der Einrichtung von Bädern in Neubauten wird dieses Vorwandinstallationssystem verwendet, welches, neben einer Wandbefestigung, auch den Vorteil bietet, daß es frei im Raum aufgestellt und am Boden befestigt werden kann. Bei einer Anordnung des Installationsschachtes im Raum erstreckt sich derselbe meist nie bis zur Decke, sondern nimmt nur etwa eine halbe Raumhöhe ein.

Das Traggestell eines solchen Installationsschachtes besteht zumindest aus zwei Seitenteilen, die leiterartig ausgebildet sein können. Diese Seitenteile werden durch besondere, zuschneidbare Profilschienen mit Abstand miteinander verbunden. Derartige Traggestelle werden immer, auch dann wenn sie direkt an eine Wand angeschlossen werden, am Boden befestigt. Dazu wird eine Vorrichtung verwendet, die aus einer Befestigungslasche besteht, die über ein in ihr ausgebildetes Langloch mittels einer Schraube unter Verwendung eines Dübels auf dem Boden gesichert wird. Zusätzlich trägt die Befestigungslasche eine fest mit ihr verbundene, senkrecht nach oben ragende Schraube, die in eine Bohrung des Traggestells oder eines mit dem Traggestell verbundenen Bügels einsteckbar ist. Über zwei gegeneinander festklemmbare Muttern kann die Höhe des Traggestells justiert werden. Das Langloch in der Befestigungslasche hat die Aufgabe, Abstandstoleranzen, die beim Bohren des Dübelloches auftreten können, auszugleichen. Nach der Befestigung des Traggestelles mit einer solchen Vorrichtung kann es jedoch vorkommen, daß sich das Traggestell aufgrund des Langloches in der Befestigungslasche verschiebt. Dies kann dazu führen, daß ein auf der Verkleidung des Installationsschachtes angebrachter Belag aus keramischen Platten reißt oder zumindest teilweise abplatzt.

Der Erfindung liegt deshalb die Aufgabe zugrunde, eine Vorrichtung zur Befestigung des Traggestells eines Installationsschachtes oder dgl. auf dem Boden eines Gehäuses so auszubilden, daß eine Verschiebung des Traggestelles bzw. des Installationsschachtes aufgrund des für die Montage erforderlichen Langloches ausgeschlossen ist.

Zur Lösung dieser Aufgabe wird gemäß der Erfindung bei einer Vorrichtung der eingangs beschriebenen Gattung vorgeschlagen, daß die Befestigungslasche an ihrer Oberseite mit einer quer zum Langloch verlaufenden Verzahnung versehen ist und daß zwischen der Oberseite der Befestigungslasche und dem Kopf der Schraube eine an ihrer Unterseite ebenfalls eine entsprechende Verzahnung aufweisende Zwischenplatte mit einer Bohrung für die Schraube angeordnet ist.

Durch diese Ausgestaltung kann sich die Befestigungslasche, nachdem sie auf dem Boden festgeschraubt ist, auch durch äußere Krafteinwirkungen nicht mehr verschieben, so daß das Traggestell seine Lage beibehält. Eine Beschädigung oder Zerstörung eines auf dem Installationsschacht aufgebrachten Belages aus keramischen Platten oder dgl. ist ausgeschlossen.

Gemäß einem weiteren Merkmal der Erfindung weist die Verzahnung auf der Befestigungslasche eine Teilung von etwa 0,5 - 3,0 mm auf. Diese kleine Teilung stellt sicher, daß das Traggestell sehr genau ausgerichtet und befestigt werden kann.

Die Erfindung wird nachfolgend anhand eines in einer Zeichnung dargestellten Ausführungsbeispieles näher erläutert.

In dieser Zeichnung ist von einem Installationsschacht nur ausschnittsweise ein Traggestell 1 dargestellt, welches auf dem Boden 2 befestigt wird. Dazu ist an dem Traggestell 1 zunächst ein plattenartiger Bügel 3 angeschweißt, der eine nicht näher dargestellte Bohrung aufweist. In diese nicht gezeichnete Bohrung wird eine Schraube 4 eingesteckt, die eine unterhalb des Bügels 3 befindliche Mutter 5 trägt. Sobald die Schraube 4 in die nicht gezeichnete Bohrung des Bügels 3 eingesteckt wurde, wird auf die Schraube 4 eine weitere Mutter 6 aufgeschraubt. Später folgt über die beiden Muttern 5,6 eine Höhenjustierung.

Die Schraube 4 ist auf der Oberseite einer Befestigungslasche 7 aus Metall angeordnet, wobei die Schraube 4 in an sich bekannter, nicht dargestellter Weise mit der Befestigungslasche 7 verschweißt bzw. vergossen ist. Diese, eine längliche Grundfläche aufweisende Befestigungslasche 7 ist mit einem Langloch 8 ausgestattet, welches den mit Gewinde versehenen Schaft 9 einer Schraube 10 aufnimmt. Die Breite des Langloches 8 ist dabei so ausgebildet, daß der Schaft 9 der Schraube 10 möglichst wenig Spiel besitzt.

Mit entsprechendem Abstand vom Traggestell 1 wird nun in dem Boden 2 eine nicht dargestellte Bohrung erzeugt, in die ein den Schaft 9 der Schraube 10 aufnehmender, ebenfalls nicht gezeigter Dübel eingesteckt wird. Nun kann die Schraube 10 in den Dübel und damit in den Boden 2 eingeschraubt werden. Um nun nach dem Ausrichten des Traggestells 1 ein Verschieben der Befestigungslasche 7 aufgrund des Langloches 8 zu vermeiden, ist die Oberseite 11 der Befestigungslasche 7 zumindest im Bereich des Langloches 8 mit einer quer zum Langloch 8 verlaufenden Verzahnung 12 versehen. Zwischen dem Kopf der Schraube 10 und der Oberseite 11 der Befestigungslasche 7 befindet sich eine Zwischenplatte 13, die einerseits eine nicht gezeichnete Bohrung zur weitgehend spielfreien Aufnahme des Schaftes 9 der Schraube 10 besitzt und andererseits an ihrer Unterseite eine Verzahnung 14 aufweist, die in ihrem Querschnitt der Verzahnung 12 der Befestigungslasche 7 entspricht. Die beiden zusammenwirkenden Verzahnungen 12,14 stellen nun sicher, daß sich das Traggestell 1, auch bei der Einwirkung von äußeren Kräften, nicht mehr auf dem Boden 2 verschieben kann. Die Zwischenplatte 13 sichert die Befestigungslasche 7 genau zur eingedrehten Schraube 10. Entsprechend der Teilung der Verzahnung 12,14, die etwa 0,5 bis 3,0 mm betragen kann, ist ein genaues Ausrichten des Traggestells 1 zur eingedrehten aber noch nicht festgezogenen Schraube 10 möglich. Sobald das Traggestell 1 seine genaue Lage eingenommen hat, wird die Schraube 10 festgedreht.

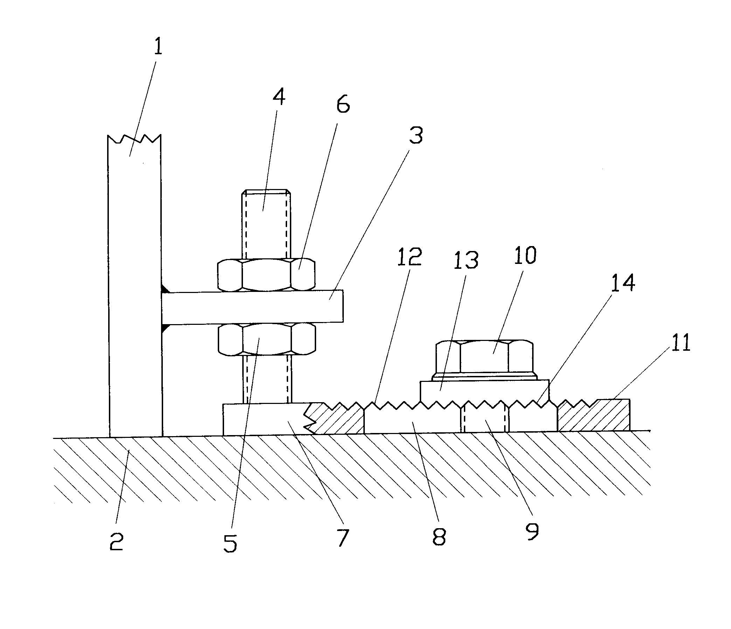

## Patentansprüche

1. Vorrichtung zur Befestigung des Traggestells eines Installationsschachtes oder dgl. auf dem Boden eines Gehäuses, bestehend aus einer Befestigungslasche, die über ein in ihr ausgebildetes Langloch mittels einer Schraube auf dem Boden gesichert ist und die eine fest mit ihr verbundene Schraube zum Anschluß des Traggestells trägt,
dadurch gekennzeichnet,
daß die Befestigungslasche (7) an ihrer Oberseite (11) mit einer quer zum Langloch (8) verlaufenden Verzahnung (12) versehen ist und daß zwischen der Oberseite (11) der Befestigungslasche (7) und dem Kopf der Schraube (10) eine an ihrer Unterseite ebenfalls eine entsprechende Verzahnung (14) aufweisende Zwischenplatte (13) mit einer Bohrung für die Schraube (10) angeordnet ist.

2. Vorrichtung nach Anspruch 1,
dadurch gekennzeichnet,
daß die Verzahnung (12, 14) eine Teilung von etwa 0,5 bis 3,0 mm aufweist.
